# EUROPÄISCHE PATENTSCHRIFT

(11) **EP 2 425 982 B1**
(45) Veröffentlichungstag und Bekanntmachung des Hinweises auf die Patenterteilung: **18.06.2014**
(21) Anmeldenummer: 11179758.5
(22) Anmeldetag: 01.09.2011
(51) Int. Cl.: B41J 3/407, G01N 35/00

(54) **Labor-Kennzeichnungs-Druckvorrichtung für Gewebekassetten, Objektträger und andere Labor- bzw. Probenbehälter**
Laboratory label printing device for tissue cassettes, object holders and other laboratory and sample containers
Dispositif d'impression de laboratoire pour cassettes de tissus, supports d'objets et autres supports de laboratoire ou d'échantillons

(30) Priorität: 01.09.2010 DE 102010036113
(43) Veröffentlichungstag der Anmeldung: 07.03.2012
(73) Patentinhaber: Slee Medical GmbH, 55129 Mainz (DE)
(72) Erfinder: Kubsch, Sebastian, 55129 Mainz (DE)
(74) Vertreter: Kodron, Felix

(56) Entgegenhaltungen:
- EP-A2- 1 245 395
- EP-A2- 2 159 562
- GB-A- 2 235 163
- JP-A- 11 138 912
- US-A1- 2001 039 896

## Beschreibung

Die Erfindung betrifft eine Labor-Kennzeichnung-Druckvorrichtung von Gewebekassetten, Objektträgern und anderen Labor- bzw. Probenbehältern und anderen Laborverbrauchsmaterialien gemäß dem Oberbegriff des Anspruchs 1.

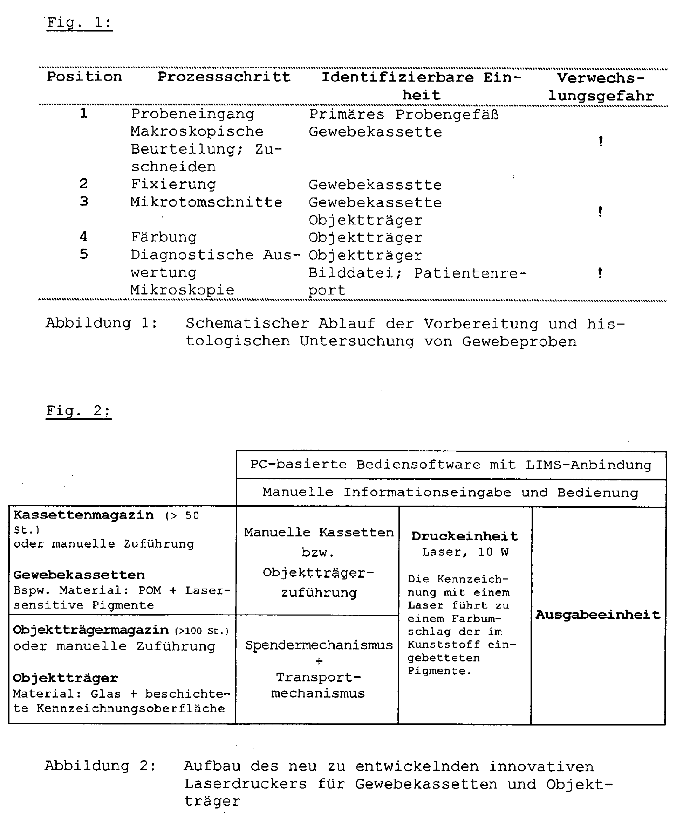

In medizinisch histologischen Laboratorien werden Gewebeproben von Patienten im Routinebetrieb nach einem bestimmten Schema (Ablauf siehe Figur 1) untersucht. Nach der makroskopischen Beurteilung der eingegangenen Proben werden diese in kleine Stücke geschnitten und in sogenannte Gewebekassetten gegeben. In der Gewebekassette werden die Proben zunächst fixiert, entwässert und in Paraffin eingebettet. Die Proben sind damit lange haltbar und nach späterer Orientierung in den Gewebekassetten die erforderlichen 15 Jahre lagerbar. Für die weiteren Untersuchungen werden Teile der in Paraffin eingebetteten Proben mit Mikrotomen geschnitten, die Sektionen auf Objektträgern fixiert, gefärbt, mit einem Deckglas eingedeckt und anschließend unter einem Mikroskop ausgewertet.

Die besondere logistische Herausforderung dieses Ablaufs liegt in der durchgehenden korrekten Zuordnung der in den einzelnen Schritten entstehenden Einheiten (Gewebekassette, Objektträger, Diagnose) zu der jeweiligen Gewebeprobe bzw. dem jeweiligen Patienten.

Um Verwechslungen auszuschließen, müssen Gewebekassetten und Objektträger durch Beschriftungen eindeutig gekennzeichnet und dauerhaft identifizierbar sein. Diese Beschriftung erfolgt in kleinen Laboratorien üblicherweise handschriftlich, dabei besteht die Gefahr von Übertragungsfehlern, zudem kann die Beschriftung bei der geforderten langen Lagerung durch Verwischen, Verkratzen oder Verblassen unleserlich werden. Deshalb wird zunehmend eine Identifizierung über Barcodes gefordert.

In größeren Laboratorien werden Drucker für die Beschriftung eingesetzt. Die derzeit auf dem Markt vorhandenen Drucker weisen erhebliche Nachteile auf, was der folgende Blick auf den Stand der Technik verdeutlichen soll.

Die Erfindung betrifft ein innovatives und kostengünstiges Druckverfahren, das für die Kennzeichnung von Gewebekassetten, Objektträgern, anderen Labor- bzw. Probenbehältern, anderen Laborverbrauchsmaterialien und Etiketten verwendet werden kann.

Die derzeit in medizinisch histologischen Laboratorien verwendeten Drucksysteme basieren auf unterschiedlichen Drucktechnologien und sind jeweils nur für eine Art von Laborbehälter einsetzbar.

Tintenstrahldrucker: Hier sind verschiedene Geräte auf dem Markt, die die auf Gewebekassetten und Objektträgern vorgesehenen beschriftbaren Flächen mit Tinte bedrucken können. Die Geräte sind ausschliesslich nur für eine Art von Laborgefäßen vorgesehen.

Erhebliche Nachteile der Tintenstrahldrucker sind: hoher Wartungsaufwand (Tinte nachfüllen), Lösemitteldämpfe, geringer Durchsatz (Druck sehr langsam), begrenzte Haltbarkeit des Aufdrucks, manuelle Zufuhr.

Laserdrucker für Gewebekassetten: Hier gibt es derzeit ein Gerät auf dem Markt, das Gewebekassetten, die in einem Spendermagazin bevorratet werden, vollautomatisch bedruckt. Das Druckprinzip beruht dabei auf dem Abtragen einer schwarzen Oberflächenbeschichtung auf der Vorderseite der speziellen Gewebekassetten. Nach dem Abtragen der Beschichtung durch den Laser bleibt die zuvor über eine Software eingegebene Beschriftung als schwarze Buchstaben bzw. als schwarzer Barcode auf der umgebenden freigelegten weißen Fläche stehen. Dieses Prinzip weist folgende Nachteile auf:
■ Beim Druck werden große Flächen der Lackbeschichtung abgetragen, dieser Abtrag muss als Abgas abgesaugt werden, zusätzlich entsteht Wartungsaufwand durch das Wechseln der Abluftfilter.
■ Die Druckauflösung ist relativ gering, da die Schrift durch Abtrag der Umgebung entsteht.
■ Die Schrift kann abgekratzt werden.
■ Das System ist relativ langsam und kann nur 5 Kassetten pro Minute bedrucken.
■ Das System ist sehr teuer in der Anschaffung.
■ Die Produktion der Kassetten ist relativ aufwendig, da sie nach der Formung in einem zusätzlichen Prozessschritt beschichtet werden müssen.

Aus diesen Gründen hat sich dieser Drucker bislang in histologischen Laboratorien trotz der Vorteile der Automatisierung und der länger haltbaren Beschriftung nicht durchgesetzt.

Laserdrucker für Objektträger: Die auf dem Markt befindlichen Laserdrucker für Objektträger brennen die Beschriftung mittels Laser aus einer beschichteten Fläche auf dem Objektträger aus, Beschriftung und Barcode erscheinen dann als durchsichtige Linien.

Keines der auf dem Markt befindlichen Geräte ist in der Lage, sowohl Gewebekassetten als auch Objektträger vollautomatisch zu bedrucken.

Aus JP 11138912 ist eine Vorrichtung zum Bedrucken von Probenbehälter bekannt.

Aus der DE 10 2006 003 056 ist ein Verfahren und eine Vorrichtung zum Bedrucken von Gegenständen, insbesondere von Kunststoffteilen, mit einer Druckmaschine der gattungsbildenden Art eines Tintenstrahldruckers bekannt. Hierbei ist die Frage der Zufuhr der zu bedruckenden Objekte und deren Vielfalt allerdings nicht behandelt.

Aufgabe der vorliegenden Erfindung ist es vor diesem Hintergrund, eine Labor-Kennzeichnung-Druckvorrichtung für Gewebekassetten, Objektträger, anderen Labor- bzw. Probenbehältern sowie anderen Laborverbrauchsmaterialien zu entwickeln, die in einem Gerät sowohl Gewebekassetten als auch Objektträger und in einem weiteren Schritt weitere Laborgefäße und Etiketten beschriften kann. Das System soll nach Beschickung der Vorratsmagazine für Gewebekassetten, Objektträger oder anderen Laborgefäßen vollautomatisch funktionieren.

Die vorliegende Lösung einer Kennzeichnungs-Drucksvorrichtung sieht zur Möglichkeit der Bedruckung von einer Vielzahl von Gegenständen eine spezielle rotierende oder verschiebbare Plattform vor, in der eine Vielzahl von Aufnahmen in Form von Durchbrechungen angeordnet ist, wobei in diese Aufnahmen verschiedene Objekthalter eingesetzt werden können, je nach zu bedruckendem Gegenstand. Das heißt, es sind beispielsweise auf der Plattform 12 Aufnahmen angeordnet, von denen ein Teil mit Objekthaltern ausgerüstet ist, die ein Bedrucken von Gewebekassetten ermöglicht, ein anderer Teil mit Objekthaltern, die Objektträger aufnehmen können, um diese ebenfalls der Druckvorrichtung zuzuführen.

Hierbei ist wesentlich, dass die Plattform unter der Druckeinheit angeordnet ist und derart um eine Drehachse bewegt oder entlang einer Führungslinie verschoben wird, dass die verschiedenen Aufnahmen der beweglichen Plattform jeweils den Stackern und der Druckeinheit zugeführt werden können, die ebenfalls auf einer oberhalb der beweglichen Platte angeordneten plattenartigen Ebene angeordnet sind.

Es ist hierbei zweckmäßig, dass die untere bewegliche Plattform und die über dieser angeordnete die Druckeinheit und Stacker tragende Basisplatte in etwa parallel zu einander angeordnet sind.

In einer zweckmäßigen Ausführung der Erfindung ist hierbei vorgesehen, dass die Aufnahmen in der beweglichen Plattform gleichförmig ausgebildet sind. Dies hat zum Vorteil, dass die Verbindungsbereiche der Objekthalter zu den Aufnahmen in der Plattform bei den unterschiedlichen Objekthaltern gleich ausgebildet sind und somit ein Austausch dieser Objekthalter in den Aufnahmen der beispielsweise Rotationsplattform möglich ist.

Es ist somit vom Anwender jederzeit selbst wählbar, welche Anzahl von Objekthaltern er für welche Gegenstände in den Aufnahmen einsetzt je nach entsprechender Laborerfordernis. Auf diese Weise ist eine Vorrichtung realisierbar, die sehr flexibel auf die jeweiligen Bedürfnisse der Labors angepasst werden kann, wobei der Art der zu bedruckenden bzw. zu kennzeichnenden Gegenstände keine Grenzen gesetzt sind.

Insbesondere ist hierbei vorteilhaft, dass durch die Verwendung eines neuen Objekthalters jederzeit auch ein neuer Gegenstand in derselben Kennzeichnungs-Druckvorrichtung gekennzeichnet werden kann. Hierdurch ist gewährleistet, dass die Vorrichtung ohne große bauliche Veränderung lediglich durch Austausch eines Objekthalters an Formänderungen der zu bedruckenden Gegenstände angepasst werden kann.

Es ist hierbei zweckmäßig, dass eine Zufuhr der Gegenstände in die Objekthalter der beispielsweise Rotationsplattform sowohl automatisch über entsprechende Spendermechanismen aus über der Rotationsplattform angeordneten Magazinen erfolgen kann, als auch eine manuelle Beschickung der Objekthalter zur Kennzeichnung möglich ist. Es sind hierbei spezielle zusätzliche Objekthalter in den Aufnahmen vorgesehen, die das manuelle Einsetzen von zu bedruckenden Gegenständen erlauben und in ihrer Form an den zu kennzeichnenden Gegenstand angepasst werden durch entsprechende Verwendung von Haltemitteln.

In einer vorteilhaften Ausführungsform der Erfindung soll die Beschriftung der Gewebekassetten über eine Technik basierend auf lasersensitiven Pigmenten erfolgen, die in den Kunststoff für die Herstellung der Gewebekassetten eingemischt werden, und die bei Kontakt mit dem Laser zu einem Farbumschlag von beispielsweise weiß nach schwarz oder braun führen. Damit wäre erstmals die Beschriftung in das Material selbst integriert und könnte nicht mehr verwischt oder abgekratzt werden, bzw. bei langer Lagerung verblassen. Zudem wäre der Druck sehr schnell und umweltfreundlich, da keine Lösemitteldämpfe und nur geringe Mengen an Abgasen freigesetzt werden.

Für die Beschriftung der Objektträger soll im Rahmen des Systems eine Oberflächenbeschichtung mit oder ohne ebenfalls lasersensitiven Pigmenten verwendet werden. Im Gerät soll dann mit dem gleichen Laser auch für die Objektträger eine Beschriftung beispielsweise über einen Farbumschlag möglich sein.

Analog hierzu ist mit weiteren zu kennzeichnenden Laborgegenständen zu verfahren. Es kann hierbei ebenfalls vorteilhaft sein, wenn die für die Laserbeschriftung erforderliche Beschichtung auch nachträglich in Form beispielsweise einer aufklebbaren Folie aufgebracht werden kann. Auch das Bedrucken von Etiketten soll so mit der Vorrichtung ermöglicht werden.

In Abbildung 2 ist der modulare Aufbau des Systems bestehend aus mehreren Kassetten- und Objektträgermagazinen, einem Spender- und Transportmechanismus für Kassetten und Objektträger, einer Druckeinheit basierend auf einem ungepulsten 10W-CO₂-Laser und einer Ausgabeeinheit für die bedruckten Gewebekassetten und Objektträger dargestellt.

Es soll mit einer manuellen Zuführung von Gewebekassetten und Objektträgern o.ä. wie auch mit einem Spender- und Transportmechanismus gearbeitet werden können. Die Informationseingabe und Steuerung soll über eine entsprechende Software mit Anbindung an die Labormanagement-Software erfolgen; wahlweise soll auch eine manuelle Steuerung über ein Bedienelement möglich sein.

Die erfindungsgemäße Labor-Kennzeichnung-Druckvorrichtung kann hierbei in folgende Module unterteilt werden:
a) die bewegliche Plattform bestehend aus beispielsweise Drehteller und Objekthaltern. Die Objekthalter ermöglichen die präzise und für den Druckvorgang benötigte Orientierung der Objekte im Drehteller. Der Drehteller wird über einen Motor zu einzelnen Positionen geführt um die Objekthalter zu be- und entladen oder die Objekte zu bedrucken.
b) die Stacker sollen optional an das Gerät angeschlossen werden können und ermöglichen eine automatische Beladung der Objekthalter mit den jeweiligen im Stacker vorhandenen Objekten. Der Stacker umfasst hierbei sowohl den Aufnahmebehälter für die zu bedruckenden Laborobjekte als auch das Zugabesystem mit Zufuhrmechanismus, durch das das zu bedruckende Objekt dem Objekthalter zugeführt wird.
c) die Entladestation ermöglicht eine automatische Entladung der bedruckten Objekte aus dem Objekthalter. Das Gerät soll mit zwei Entladestationen ausgerüstet sein, die einzeln angesteuert werden können.
d) die Beladestation ermöglicht ein manuelles Beladen der Objekthalter mit Objekten, die nicht über einen Stacker zugeführt werden.
e) die Druckeinheit basiert auf einem ungepulsten 10W-CO2-Laser mit einem Arbeitsbereich von ca. 75 mm x 75 mm.
f) die Software ermöglicht über einen Anschluss an ein Labor-Informations-Management-System (LIMS) einen Austausch von Patientendaten zur Vorbereitung der Kennzeichnung der Objekte.

Im Folgenden wird der Erfindungsgegenstand anhand von Zeichnungen näher erläutert.

Es zeigen
- Figur 3: eine perspektivische Gesamtansicht der Labor-Kennzeichnungs-Druckvorrichtung;
- Figur 4: eine perspektivische Ansicht auf die Basisplatte der Labor-Kennzeichnungs-Druckvorrichtung mit aufgesetzten Stackern;
- Figur 5: eine schräge Ansicht von unten auf die Basisplatte mit ansitzender Rotationsplattform und Rotationsantrieb sowie den an der Rotationsplattform angeordneten Objekthaltern;
- Figur 6: eine perspektivische Ansicht auf die Rückseite der Druckvorrichtung und
- Figur 7: eine perspektivische Ansicht auf die Basisplatte der Labor-Kennzeichnungs-Druckvorrichtung mit einem anderen Stackertyp.

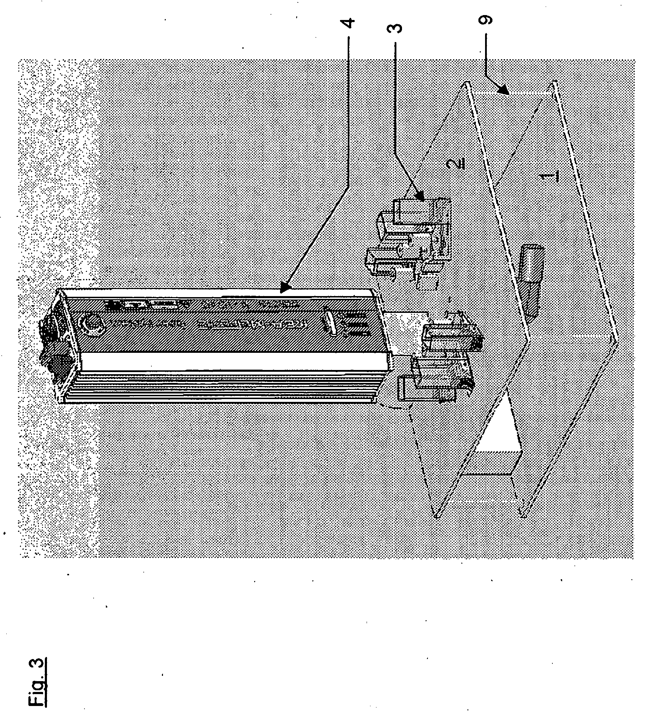

In Figur 3 ist die Vorrichtung in Ihrer Gesamtheit dargestellt, wobei das Grundkonzept ein Rahmen gebildet aus einer Bodenplatte 1 und einer Basisplatte 2 ist, die durch vertikale Säulen 9 zu einem Maschinenrahmen verbunden sind. Auf der oberen Basisplatte 2 sind nun mehrere Stacker 3 angeordnet, die zu bedruckende Objekte durch in der Zeichnung nicht erkennbare gleichförmige Durchbrechungen in der Basisplatte 2 in unter der Basisplatte geführte Objekthalter 7 transportieren.

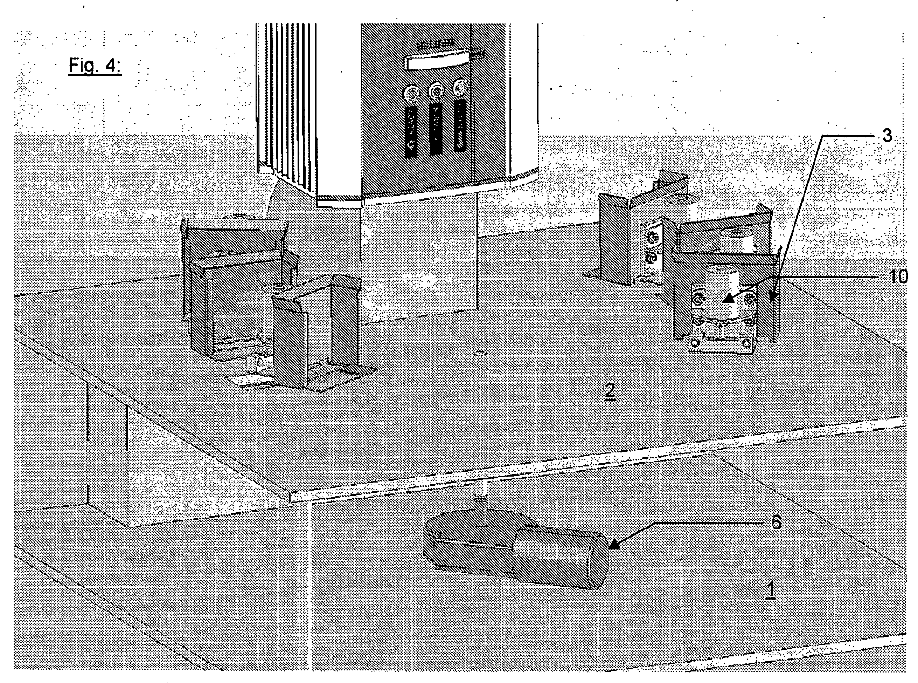

Die Stacker 3 sind hierbei sowohl als Aufnahmebehälter für Objekte wie beispielsweise Gewebekassetten ausgebildet, umfassen aber auch entsprechende zur Förderung dieser Objekte benötigte mechanische Komponenten und beispielsweise auch elektrische Antriebe 10 dieser Komponenten, um automatisiert Objekte in die Objekthalter 7 fördern zu können. Dies ist im Detail in Figur 4 dargestellt.

Ebenfalls auf der Basisplatte 2 angeordnet istder Laserdrucker 4, im vorliegenden Fall ein 10W-CO2-Laser, der ebenfalls über einer Durchbrechung in der Basisplatte 2 angeordnet ist und so die unterhalb der Basisplatte 2 geführten Objekte bedruckt, wobei die Rotationsplattform 5 dem Laser 4 die Objekte zuführt.

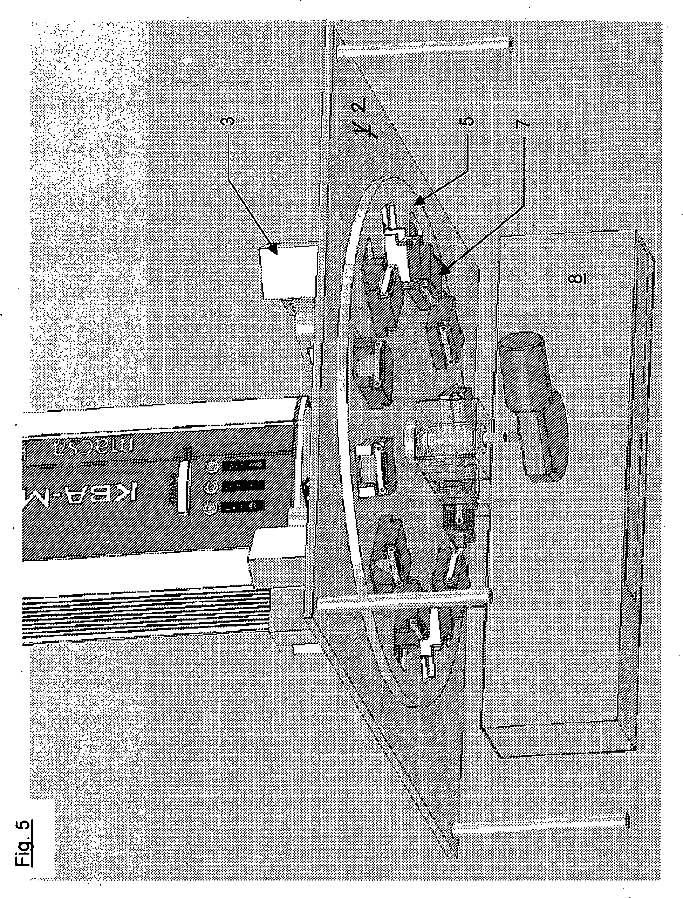

In Figur 5 ist die Anordnung der Rotationsplattform 5 unterhalb der Basisplatte 2 dargestellt, wobei ebenfalls ein Antrieb 6 für diese Rotationsplattform 5 dargestellt ist. Auf der Unterseite dieser Rotationsplattform 5, die sehr dicht unterhalb der Basisplatte 2 geführt ist, befinden sich eine Reihe von Objekthaltern 7, die unter Durchbrechungen in der Rotationsplattform 5 angeordnet sind.

Die Anordnung der Durchbrechungen in der Rotationsplattform 5 ist hierbei analog zu der der Durchbrechungen in der Basisplatte 2 anzuordnen, um eine Bestückung einer Vielzahl von Objekthaltern 7 in der Rotationsplattform 5 gleichzeitig zu ermöglichen. Die Objekthalter 7 sitzen hierbei auf der Unterseite der Rotationsplattform 5, sodass bei entsprechender Zufuhr der Objekte aus den Stackern 3 durch die Durchbrechungen in der Basisplatte 2 dieser Objekte leicht durch die Schwerkraft unterstützt in die Objekthalter 7 hineingleiten können.

Die Objekthalter 7 weisen hierbei zweckmäßigerweise ebenfalls eine Ausgabemechanik auf, die eine Freigabe der bedruckten Objekte nach dem Druckvorgang bewirkt, sodass diese in einem Auffangbehälter 8 der Druckvorrichtung gleiten können.

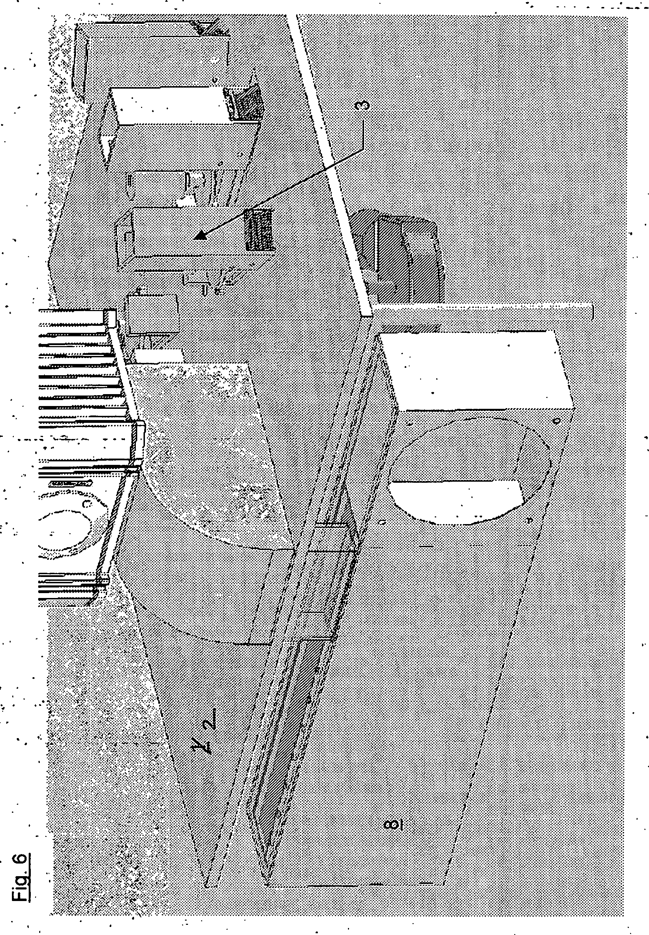

In Figur 6 ist dieser Auffang- und Entnahmebehälter 8 für die bedruckten Objekte an der Rückseite der Vorrichtung dargestellt. Nach dem Bedrucken können so die bedruckten Objekte ebenfalls lediglich aufgrund der vorhandenen Schwerkraft in diese Aufnahme gleiten und entnommen werden.

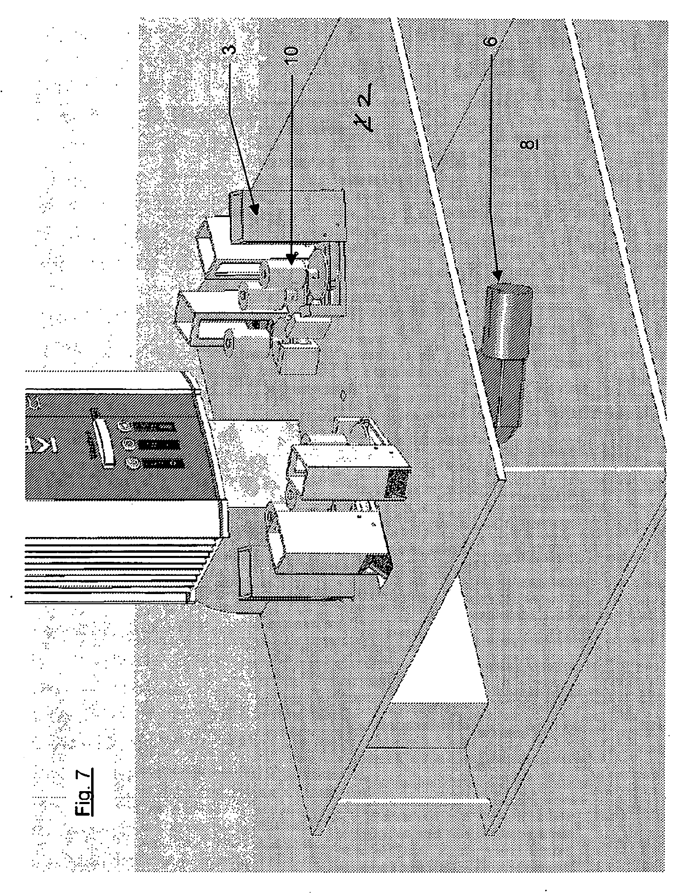

Schließlich soll anhand von Figur 7 verdeutlicht werden, dass die Stacker 3 auf der Basisplatte 2 für verschiedene Objekte unterschiedlich ausgebildet sein können. In Figur 4 ist eine offene Bauform beispielsweise für Objektträger dargestellt und in Figur 7 eine geschlossene Bauform beispielsweise für Gewebekassetten. Der Austausch ist hierbei leicht möglich, da die Verbindungsbereiche zu den Durchbrechungen in der Basisplatte 2 bei den verschiedenen Stackern 3 gleich ausgebildet sind. Auch eine Mischanordnung verschiedener Stacker und so der Druck auf unterschiedliche Objekte kann so realisiert werden.

Eine Darstellung einer Bauform mit in etwa linear verschiebbarer unterer Plattform ist hier zeichnerisch nicht dargestellt. Der Vorteil der Rotationsbauform liegt hierbei in der kompakteren Bauform der Vorrichtung.

## Patentansprüche

1. Labor-Kennzeichnungs-Druckvorrichtung für Gewebekassetten, Objektträger, andere Labor- bzw. Probenbehälter sowie andere Laborverbrauchsmaterialien, umfassend zumindest eine Druckeinheit, zumindest ein Magazin zur Aufnahme von zu bedruckenden Gegenständen sowie einen Spender- und Transportmechanismus zur Zufuhr der zu bedruckenden Gegenstände zur Druckeinheit,
**dadurch gekennzeichnet, dass**
- der Transport der zu bedruckenden Gegenstände mittels einer beweglichen Plattform (5) ausgebildet als Rotationsplattform oder als linear verschiebbare Plattform erfolgt, die eine Vielzahl von Durchbrechungen aufweist, in die den aufzunehmenden Objekten angepasste Objekthalter (7) angeordnet sind,
- diese Plattform (5) unter einer die Druckeinheit (4) und den zumindest einen magazinartigen Stacker (3) tragenden weiteren Basisplatte (2) drehbar gelagert oder verschiebbar angeordnet ist und die Basisplatte (2) und die Plattform (5) derart zueinander fluchtend angeordnete Durchbrechungen aufweisen,
- dass die Objekthalter (7) in der beweglichen Plattform (5) zur Beladung mit Objekten erst unter die dem Stacker (3) zugeordnete Durchbrechung und dann unter die der Druckeinheit (4) zugeordnete Durchbrechung geführt werden können.

2. Labor-Kennzeichnungs-Druckvorrichtung nach Anspruch 1,
**dadurch gekennzeichnet, daß**
die Durchbrechungen in der Plattform (5) und der Basisplatte (2) gleichförmig ausgebildet sind, wodurch auch die in diesen angeordneten Objekthalter (7) identische Verbindungsbereiche zu den Durchbrechungen aufweisen und untereinander austauschbar sind.

3. Labor-Kennzeichnungs-Druckvorrichtung nach einem der vorangegangenen Ansprüche,
**dadurch gekennzeichnet, dass**
die verwendeten Objekthalter (7) Aufnahmevertiefungen aufweisen, die in ihrer Formgebung derart gestaltet sind, dass sie zum einen die zu bedruckenden Objekte sicher fixieren und gleichzeitig ausrichten, so dass die zu bedruckende Fläche zur Druckeinheit (4) definiert ausgerichtet ist und der Druck unabhängig vom Objekt in der Ebene der Plattform (5) erfolgt.

4. Labor-Kennzeichnungs-Druckvorrichtung nach einem der vorangegangenen Ansprüche,
**dadurch gekennzeichnet, daß**
der Objekthalter (7) zur Aufnahme von Gewebekassetten eine schräg unterhalb der Plattform (5) verlaufende schachtartige Vertiefung zur Aufnahme der Kassette aufweist, so dass die schräg verlaufende frontale Fläche der Gewebekassetten zur Bedruckung parallel zur Ebene der Plattform (5) verlaufend ausgerichtet ist.

5. Labor-Kennzeichnungs-Druckvorrichtung nach einem der vorangegangenen Ansprüche,
**dadurch gekennzeichnet, daß**
die Druckeinheit eingerichtet ist um die Beschriftung der Gegenstände mittels eines 10W-CO2-Lasers durchzuführen.

6. Labor-Kennzeichnungs-Druckvorrichtung nach einem der vorherigen Ansprüche,
**dadurch gekennzeichnet, daß**
die Druckvorrichtung eingerichtet ist um die Kennzeichnung von Gegenständen aus einem Polyacetalgemisch durchzuführen, das lasersensitive Pigmente enthält, die mittels des 10W-CO₂-Lasers aktiviert werden.

7. Labor-Kennzeichnungs-Druckvorrichtung nach einem der vorherigen Ansprüche,
**dadurch gekennzeichnet, dass**
die Basisplatte (2) und die bewegliche Plattform (5) in etwa parallel zueinander angeordnet sind.

## Claims

1. Laboratory identification printing device for tissue cartridges, specimen holder, other laboratory or, respectively, sample containers and other laboratory consumption items, encompassing at least one printing unit, at least one magazine to incorporate the items to be printed as well as a dispenser and transport mechanism to feed the items to be printed to the printing unit,
**characterized in that**
- the transport of the item to be printed takes place by means of a moveable platform (5) designed as a rotating platform or as a linear adjustable platform which exhibits a number of through holes in which the object retainer (7) to suit the object to be incorporated is allocated,
- this platform (5) is located under a further base plate (2) printing unit (4) and at least one magazine type stacker (3)mounted which can be turned or traversed and the base plate (2) and the platform (5) exhibit through holes which are located aligned with one another,
- the object retainer (7) in the moveable platform (5) can first be fed below the through hole located below the stacker (3) and then under the through hole allocated for the printing unit (4).

2. Laboratory identification printing device according to Claim 1,
**characterized in that**
the through holes in the platform (5) and the base plate (2)are formed in the same manner whereby these also exhibit identical connection areas to the through holes in the object retainer allocated (7) and are interchangeable.

3. Laboratory identification printing device in accordance with one of the foregoing claims,
**characterized in that**
the object retainer used (7) exhibits cradles which are formed in such manner that they for the one part securely fix the object to be printed and simultaneously position this so that the area to be printed is facing the printing unit (4) in a defined manner and that the print can be effected independent of the object at the level of the platform (5).

4. Laboratory identification printing device in accordance with one of the foregoing claims,
**characterized in that**
the object retainer (7) for holding tissue cartridges exhibits a duct-like indentation at an angle below the platform (5) to accept the tissue cartridge so that the angled front surface of the tissue cartridges to be printed is positioned parallel to the level of the platform (5) for printing.

5. Laboratory identification printing device in accordance with one of the foregoing claims,
**characterized in that**
the printing device is designed to execute printing of the objects by means of a 10W CO₂ laser.

6. Laboratory identification printing device in accordance with one of the previous claims,
**characterized in that**
the printing device is designed to execute the identification printing of objects with a polyacetal blend which contains laser sensitive pigments which can be activated by means of the 10W CO₂ laser.

7. Laboratory identification printing device in accordance with one of the previous claims,
**characterized in that**
the base plate (2) and the moveable platform (5) are positioned practically parallel to one another.

## Revendications

1. Dispositif d'impression d'étiquettes de laboratoire pour cassettes biologiques, lames porte-objets, autres récipients de laboratoire et conteneurs d'échantillons ainsi que d'autres matériels et consommables de laboratoire, comprenant au moins une unité d'impression, au moins un chargeur destiné à recevoir les objets à imprimer ainsi qu'un mécanisme de distribution et de transport permettant de conduire les objets à imprimer vers l'unité d'impression,
**caractérisé en ce que**
- le transport des objets à imprimer est effectué à l'aide d'une plate-forme mobile (5) conçue sous forme de plate-forme rotative ou de plate-forme à déplacement linéaire qui présente un grand nombre de perforations dans lesquelles sont disposés les supports d'objets (7) adaptés aux objets à recevoir,
- cette plate-forme (5) est montée en rotation ou disposée de manière coulissante sous une autre plaque de base (2) supportant l'unité de pression (4) et au moins un empileur de type chargeur (3) et que la plaque de base (2) et la plate-forme (5) présentent des perforations alignées entre elles de telle façon,
- que les supports d'objets (7) dans la plate-forme mobile (5) peuvent être conduits, en vue de charger les objets, en premier lieu sous la perforation attribuée à l'empileur (3), puis sous la perforation attribuée à l'unité d'impression (4).

2. Dispositif d'impression d'étiquettes de laboratoire selon la revendication 1,
**caractérisé en ce que**
les perforations dans la plate-forme (5) et la plaque de base (2) sont formées de manière homogène, de façon à ce que les supports d'objets (7) disposés dans celles-ci présentent des zones de raccordement identiques aux perforations et soient interchangeables.

3. Dispositif d'impression d'étiquettes de laboratoire selon l'une des revendications précédentes,
**caractérisé en ce que**
les supports d'objets utilisés (7) présentent des cavités de logement qui sont formées de façon à fixer de manière sûre et à aligner simultanément les objets à imprimer, de façon à ce que la surface à imprimer soit orientée vers l'unité d'impression (4) de manière définie et que l'impression soit effectuée, quel que soit l'objet, au niveau de la plate-forme (5).

4. Dispositif d'impression d'étiquettes de laboratoire selon l'une des revendications précédentes,
**caractérisé en ce que**
le support d'objets (7) présente, pour la réception de cassettes biologiques, une cavité inclinée de type puits sous la plate-forme (5) destinée à la réception de la cassette, si bien que la surface frontale inclinée des cassettes biologiques est orientée parallèlement au niveau de la plate-forme (5) pour l'impression.

5. Dispositif d'impression d'étiquettes de laboratoire selon l'une des revendications précédentes,
**caractérisé en ce que**
l'unité d'impression est mise en place pour réaliser l'étiquetage des objets à l'aide d'un laser CO2 10 W.

6. Dispositif d'impression d'étiquettes de laboratoire selon l'une des revendications précédentes,
**caractérisé en ce que**
le dispositif d'impression est mis en place pour réaliser l'étiquetage des objets à partir d'un mélange de polyacétal qui contient des pigments sensibles au laser qui sont activés à l'aide du laser CO2 10 W.

7. Dispositif d'impression d'étiquettes de laboratoire selon l'une des revendications précédentes,
**caractérisé en ce que**
la plaque de base (2) et la plate-forme mobile (5) sont pratiquement disposées parallèlement l'une à l'autre.
